(19) Europäisches Patentamt
European Patent Office
Office européen des brevets

(11) **EP 2 642 121 B1**

(12) **FASCICULE DE BREVET EUROPEEN**

(45) Date de publication et mention
de la délivrance du brevet:
**24.08.2016 Bulletin 2016/34**

(51) Int Cl.:
*F03D 7/02* *(2006.01)*     *F03D 7/04* *(2006.01)*

(21) Numéro de dépôt: **13305256.3**

(22) Date de dépôt: **07.03.2013**

(54) **Procédé pour contrôler une éolienne en optimisant sa production tout en minimisant l'impact mécanique sur la transmission**

Verfahren zur Steuerung einer Windkraftanlage durch Optimierung ihrer Energieerzeugung bei gleichzeitiger Minimierung der mechanischen Auswirkung auf ihr Getriebe

Method for controlling a wind turbine by optimising the production thereof while minimising the mechanical impact on transmission

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2012 FR 1200836**

(43) Date de publication de la demande:
**25.09.2013 Bulletin 2013/39**

(73) Titulaire: **IFP Énergies nouvelles**
**92852 Rueil-Malmaison Cedex (FR)**

(72) Inventeur: **CHAUVIN, Jonathan**
**75017 PARIS (FR)**

(56) Documents cités:
**EP-A1- 0 008 584     US-A1- 2009 212 565**

• **KASPER ZINCK OSTERGAARD ET AL: "Gain-scheduled Linear Quadratic Control of Wind Turbines Operating at High Wind Speed", CONTROL APPLICATIONS, 2007. CCA 2007. IEEE INTERNATIONAL CONFERENCE ON, IEEE, PI, 1 octobre 2007 (2007-10-01), pages 276-281, XP031164880, ISBN: 978-1-4244-0442-1**
• **LAKS J H ET AL: "Control of wind turbines: Past, present, and future", AMERICAN CONTROL CONFERENCE, 2009. ACC '09, IEEE, PISCATAWAY, NJ, USA, 10 juin 2009 (2009-06-10), pages 2096-2103, XP031487142, ISBN: 978-1-4244-4523-3**
• **BOUKHEZZAR ET AL: "Multivariable control strategy for variable speed, variable pitch wind turbines", RENEWABLE ENERGY, PERGAMON PRESS, OXFORD, GB, vol. 32, no. 8, 28 novembre 2006 (2006-11-28), pages 1273-1287, XP005783300, ISSN: 0960-1481, DOI: 10.1016/J.RENENE.2006.06.010**

**Description**

Une éolienne permet de transformer l'énergie cinétique du vent en énergie électrique ou mécanique. Elle se compose des éléments suivants :

- un mât permet de placer le rotor à une hauteur suffisante pour permettre son mouvement (nécessaire pour les éoliennes à axe horizontal) ou placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, etc...);

- une nacelle montée au sommet du mât, abritant les composants mécaniques, pneumatiques, certains composants électriques et électroniques, nécessaires au fonctionnement de la machine. La nacelle peut tourner pour orienter la machine dans la bonne direction ;

- un rotor, composé de plusieurs pales (en général trois) et du nez de l'éolienne, fixé à la nacelle. Le rotor est entraîné par l'énergie du vent, il est relié par un arbre mécanique directement ou indirectement (via un système de boite de vitesse et d'arbre mécanique) à la machine électrique (générateur électrique...) qui convertit l'énergie recueillie en énergie électrique ;

- une transmission, composée de deux axes (arbre mécanique du rotor et arbre mécanique de la machine électrique) reliés par une boite de vitesse.

Dans le cas de l'éolien offshore, on distingue le cas où l'éolienne est posée sur le fond marin (éolienne posée ou fondée), et le cas où l'éolienne est supportée par une plate-forme qui flotte sur la mer et qui est ancrée avec le fond (éolienne flottante).

Depuis le début des années 1990 l'énergie éolienne a connu un regain d'intérêt, en particulier dans l'Union européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré. Les éoliennes sont conçues pour produire de l'électricité à un prix aussi bas que possible. Par conséquent, les éoliennes sont en général construites de manière à atteindre leur performance maximale à environ 15 m/s. Il est en fait inutile de concevoir des éoliennes qui maximalisent leur rendement à des vitesses de vent encore plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

La perspective d'augmentation de production d'énergie éolienne nécessite le développement d'outils de production efficaces, et des outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale à environ 15 m/s. Il est en fait inutile de concevoir des éoliennes qui maximalisent leur rendement à des vitesses de vent encore plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Les contrôleurs linéaires ont été largement utilisés pour la régulation de puissance par le contrôle de l'angle d'inclinaison des pales (orientation des pales). On connaît des techniques utilisant des contrôleurs PI et PID, des techniques de contrôle LQ et LQG, des stratégies basées sur des commandes linéaires robustes.

Toutefois, les performances de ces contrôleurs linéaires sont limitées par les caractéristiques fortement non linéaires de l'éolienne. Des premières stratégies basées sur des commandes non linéaires ont été utilisées dans : Boukhezzar B., Lupu L., Siguerdidjane H., Hand M. "Multivariable control strategy for variable speed, variable pitch wind turbines" Renewable Energy, 32 (2007) 1273-1287.

Cependant, aucun de ces contrôleurs ne permet de prendre en compte l'impact mécanique (fatigue et moment extrême) sur la transmission. Or, les casses ou dommages au niveau de la transmission sont la part la plus importante où l'éolienne ne fonctionne pas. A partir de données récupérées sur une application offshore, les casses de la transmission, de la boite de vitesse ou de la machine électrique correspondent à près de 39 % du temps où l'éolienne ne produit pas. Le document EP 0008 584 A1 est une première approche par prendre en compte l'impacte de la transmission lors de la commande de l'angle d'inclinaison des pales.

L'objet de l'invention concerne un procédé pour optimiser la production d'énergie électrique d'une éolienne, en effectuant un contrôle non linéaire de l'orientation des pales prenant en compte les dynamiques du système, tout en minimisant l'impact mécanique sur la transmission. L'impact est minimisé en diminuant les variations de vitesse de torsion de la transmission en prenant en compte la dérivée de l'angle de torsion de la transmission.

**Le procédé selon l'invention**

De façon générale, l'invention concerne un procédé pour optimiser la production d'énergie électrique d'une éolienne, ladite éolienne comportant une nacelle munie d'un rotor sur lequel des pales sont fixées, et une machine électrique reliée audit rotor par une transmission, dans lequel on contrôle un angle d'inclinaison desdites pâles. Le procédé comporte les étapes suivantes :

a) on détermine une consigne de couple aérodynamique et une consigne de couple de la machine électrique permettant de maximiser la puissance récupérée, à partir de mesures de vitesse de vent, de vitesse du rotor et de vitesse de la machine électrique ;

b) on modifie au moins l'une desdites consignes en lui soustrayant un terme proportionnel à un écart entre vitesse mesurée du rotor et vitesse mesurée de la machine électrique ;

c) on détermine un angle d'inclinaison des pales permettant de réaliser ladite consigne de couple aérodynamique ;

d) on oriente les pales selon ledit angle d'inclinaison.

Selon l'invention, on peut modifier au moins l'une desdites consignes en réalisant les étapes suivantes :

i) on détermine un couple $\overline{T}_{res}$ sur ladite transmission résultant desdites consignes de couple aérodynamique et de couple de la machine électrique ;

ii) on détermine une consigne de couple résultant $T_{res}^{sp}$ en soustrayant audit couple résultant $T_{res}$ un terme proportionnel à l'écart entre la vitesse mesurée du rotor et la vitesse mesurée de la machine électrique ;

iii) on modifie ladite consigne de couple aérodynamique en répartissant ladite consigne de couple résultant en un couple aérodynamique et un couple de la machine électrique.

Selon l'invention, la consigne de couple résultant $T_{res}^{sp}$ peut s'écrire de la façon suivante :

$$T_{res}^{sp} = \overline{T_{res}} - k\dot{\gamma}_{tr}$$

- avec k des paramètres de calibration strictement positif, et $\dot{\gamma}_{tr}$ est la vitesse de la torsion de la transmission, égale à la différence de vitesse du rotor $\Omega_r$ et de la machine électrique $\Omega_g$ ramenée sur le même axe : $\dot{\gamma}_{tr} = \Omega_r - \dfrac{1}{N}\Omega_g$, où N est un rapport de boîte entre axe du rotor et axe de la machine électrique.

On peut déterminer l'angle d'inclinaison des pales en inversant un modèle de couple aérodynamique et en utilisant lesdites mesures de vitesse de vent et de vitesse du rotor.
Enfin, on peut déterminer le terme proportionnel en utilisant un modèle de la dynamique de la transmission.
D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- La figure 1 représente l'enchainement des étapes du procédé selon l'invention.

- La figure 2 illustre un exemple de cartographie du paramètre $c_q$.

**Description détaillée du procédé**

Au cours de la description, les notations suivantes sont utilisées :

*Variables contrôlées :*

- θ l'angle d'inclinaison des pales en degré, aussi appelé « pitch », et qui correspond à l'angle de prise au vent de chacune des pales.

- Tg le couple de la machine électrique en Nm ;

- $T_{aero}$ le couple aérodynamique (effort en rotation appliqué au rotor sous l'effet du vent).

*Variables mesurées, notées MES(-):*

- $V_w$ la vitesse du vent en m/s. Cette vitesse est issue d'une mesure à partir d'un anémomètre ou issue d'une estimation ;

- $\Omega_r$ la vitesse du rotor en rad/s ;

- $\Omega_g$ la vitesse de la machine électrique en rad/s.

L'objectif du procédé selon l'invention est de maximiser la production d'énergie d'une éolienne onshore ou offshore tout en limitant les moments extrêmes et la fatigue de la transmission. Pour ce faire, on détermine dans un premier temps une consigne de vitesse de rotor et une consigne de couple de la machine électrique pour maximiser la puissance récupérée. Ces deux consignes sont obtenues au moyen de cartographies qui sont fonction de la vitesse de vent. Ce type de cartographies est bien connu des spécialistes.

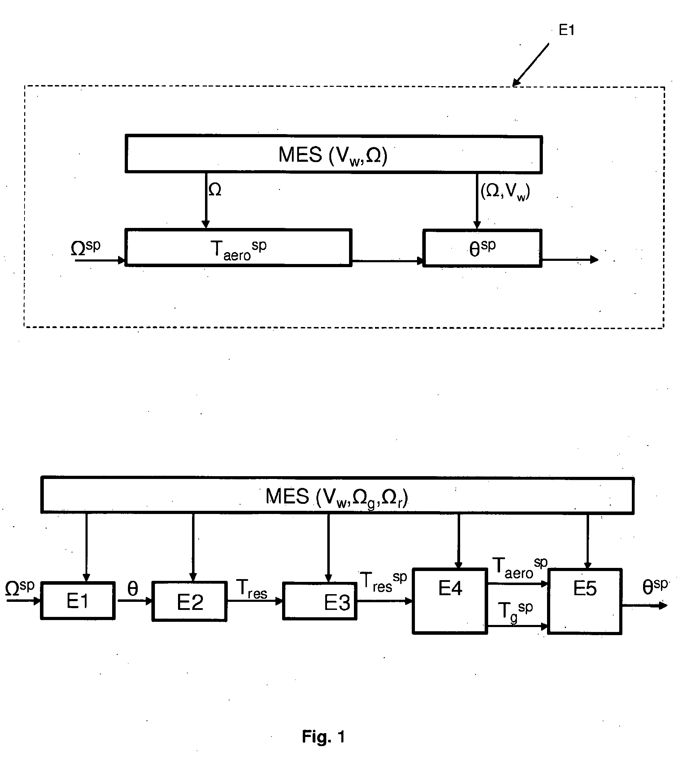

Pour contrôler la structure mécanique, nous pilotons le couple aérodynamique rapporté au hub en actionnant l'orientation des pales. Pour cela, nous utilisons des modèles de ce couple aérodynamique moyen en fonction du pitch, de la vitesse de vent et de la vitesse du rotor. Ensuite, nous modifions la consigne de position du pitch et du couple de la machine électrique afin de limiter l'impact mécanique des variations de vent. Ainsi, pour piloter le système, nous réalisons les étapes suivantes, illustrées sur la figure 1 :

E1. Détermination du pitch permettant d'optimiser la puissance récupérée

*i- Génération d'une consigne de couple éléctrique $T_g^{sp}$*

*ii- Génération d'une consigne de couple aérodynamique $T_{aero}^{sp}$*

*iii- Détermination d'une position de pitch θ*

E2. Détermination du couple résultant des consignes de couples $T_g^{sp}$ et $T_{aero}^{sp}$

E3. Génération d'une consigne de couple résultant $\left( T_{res}^{sp} \right)$ qui diminue la fatigue et les moments extrêmes de la transmission

E4. Répartition du couple résultant consigne $\left( T_{res}^{sp} \right)$ entre les couples aérodynamiques et électriques

E5. Détermination d'une position de pitch qui permet de réaliser ce couple aérodynamique E6. Orientation des pales selon le pitch déterminé

<u>1. Détermination du pitch permettant d'optimiser la puissance récupérée</u>

Un objectif du procédé selon l'invention est de maximiser la production d'énergie d'une éolienne à axe horizontal (hélice perpendiculaire au vent), implantée sur terre ("onshore") ou en mer ("offshore"), tout en limitant les moments extrêmes et la fatigue de la structure mécanique.

Pour maximiser la production d'énergie d'une éolienne on recherche l'angle d'inclinaison des pales, appelée « pitch » et notée $\theta$, permettant de maximiser la puissance récupérée $P_{aero}$ en fonction de la vitesse du vent $V_w$. L'orientation des pales est l'angle entre les pales et une référence tel que le sol (plan horizontal, perpendiculaire au mât de l'éolienne).

Selon un mode de réalisation, pour définir cet angle, on utilise un modèle de la puissance récupérable. Cette puissance $P_{aero}$ peut s'écrire :

$$P_{aero} = T_{aero} * \Omega_r$$

Avec:

- $T_{aero}$ le couple aérodynamique (effort en rotation appliqué au rotor sous l'effet du vent) ;
- $\Omega_r$ la vitesse du rotor en rad/s.

Oh recherche donc l'angle $\theta$ qui permet de maximiser $P_{aero}$. Pour ce faire, on réalise les étapes suivantes :

- i. - Génération d'une consigne de couple de la machine électrique $T_g^{sp}$
- ii - Génération d'une consigne de couple aérodynamique $T_{aero}^{sp}$
- iii - Détermination d'une position de pitch $\theta$

*i- Génération d'une consigne* couple de la machine électrique $T_g^{sp}$

On détermine dans un premier temps une consigne couple de la machine électrique $T_g^{sp}$ . Cette consigne est obtenue au moyen d'une cartographie en fonction de la vitesse de la machine électrique.

Selon l'invention, on modélise le couple aérodynamique $T_{aero}$ par un modèle décrivant la puissance du vent contenue dans un cylindre, multiplié par un facteur décrivant le fait qu'une éolienne ne permet de récupérer qu'une partie de cette puissance. On modélise ainsi le couple aérodynamique en fonction de la vitesse du vent $V_w$, du pitch $\theta$ et de la vitesse du rotor $\Omega_r$. Un tel modèle peut s'écrire ainsi en régime stabilisé :

$$T_{aero} = 0.5\rho\Pi R_b^3 c_q\left(\theta, \frac{R_b\Omega_r}{V_w}\right)V_w^2 \qquad (1)$$

Avec:

- $R_b$ : rayon du rotor ;
- $\rho$ : densité de l'air ;
- $c_q$ : cartographie à calibrer.

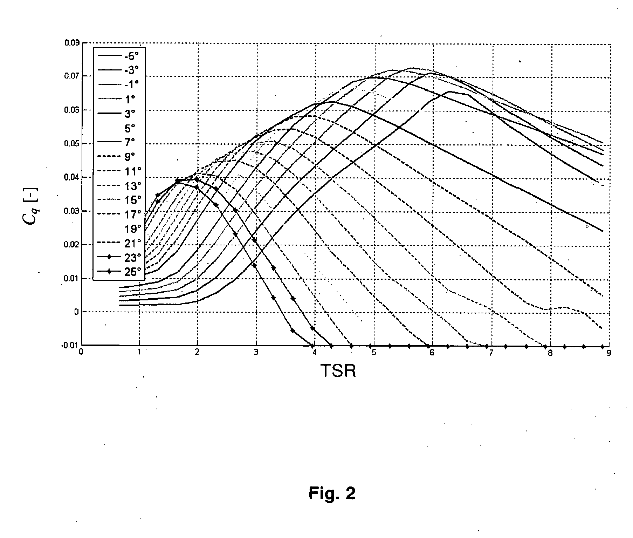

Un exemple de cartographie du paramètre $c_q$ est présenté sur là figure 2. Cette cartographie indique la valeur du paramètre $c_q$ en fonction du rapport $\frac{R_b\Omega_r}{V_w}$ , pour différents pitchs (une courbe pour chaque $\theta$). Ce type de cartographies est bien connu des spécialistes. Le rapport $\frac{R_b\Omega_r}{V_w}$ est noté TSR sur la figure 2.

Ainsi, pour déterminer la consigne de couple de la machine électrique en fonction de la vitesse de la machine électrique, on optimise la puissance aérodynamique récupérée pour chaque vitesse de vent.

$$T_g^{sp} = \arg\left(\max_{\theta, V_w} \frac{0.5}{N}\rho\Pi R_b^3 c_q\left(\theta, \frac{R_b\Omega_g}{NV_w}\right)V_w^2\right)$$

Cela nous permet d'avoir le couple consigne Tg qui dépend de la vitesse de la machine électrique : $T_g^{sp}$ =f($\Omega_g$)

Cependant, par rapport à cette courbe de référence, nous appliquons deux limitations :

- un couple nul pour les faibles vitesses de la machine électrique pour pouvoir augmenter la vitesse de l'éolienne ;
- un couple maximum pour limiter la puissance de la machine électrique.

Ainsi, nous avons trois régions sur la courbe $T_g^{sp}$ =f($\Omega_g$) :

- Région 1 : à couple nul ;
- Région 2 : à couple optimal ;
- Région 3 : à couple limité par la puissance maximum.

*ii - Génération d'une consigne de couple aérodynamique $T_{aero}^{sp}$*

Le but est de générer une consigne de couple aérodynamique $T_{aero}^{sp}$ permettant de réaliser la vitesse de rotor consigne $\Omega_r^{sp}$. Pour cela, nous utilisons un modèle de la dynamique du rotor.

$$J_r\frac{d\Omega_r}{dt} = T_{aero} - T_l(\Omega_r) - NT_g(\Omega_g)$$

Avec :

- $J_r$ : inertie du rotor ;
- $T_l(\Omega_r)$ : couple de frottement et de charge sur le rotor (on utilise classiquement un polynôme d'ordre deux) ;
- N : rapport de boîte entre l'axe du rotor et l'axe de la machine électrique.

Ainsi, la stratégie de contrôle utilisée est une stratégie de contrôle dynamique qui anticipe la variation de consigne et qui corrige avec deux termes, un terme proportionnel et un terme intégral. La stratégie s'écrit :

$$T_{aero}^{sp} = T_l(\Omega_r) + NT_e(\Omega_r) + J_r\frac{d\Omega_r^{sp}}{dt} - k_p(\Omega_r - \Omega_r^{sp}) - k_i\int(\Omega_r - \Omega_r^{sp})$$

où kp et ki sont deux paramètres réels à calibrer pour garantir la convergence de la vitesse vers sa consigne.

*iii - Détermination d'une position de pitch $\theta$*

A partir de cette consigne de couple aérodynamique $T_{aero}^{sp}$, on détermine un angle d'inclinaison $\theta$ des pales pour satisfaire cette demande de couple aérodynamique $T_{aero}^{sp}$. Pour cela, on utilise le modèle de couple aérodynamique (équation 1), avec la mesure de la vitesse du vent $V_w$, la mesure du régime du rotor $\Omega_r^{sp}$ et le couple consigne $T_{aero}^{sp}$. En inversant le modèle (par un algorithme de Newton par exemple), on obtient une consigne de pitch $\overline{\theta}$ :

$$\bar{\theta} = \arg\left(\min_{\theta}\left(T_{aero}^{sp} - 0.5\rho\Pi R_b^3 c_q\left(\theta, \frac{R_b\Omega_r}{V_w}\right)V_w^2\right)\right)$$

Ainsi, avec cette loi de commande, on garantit la convergence vers la vitesse rotor de référence, permettant de maximiser la puissance récupérée.

<u>2 - Détermination du couple résultant des consignes de couples $T_g^{sp}$ et $T_{aero}^{sp}$</u>

A partir des consignes $T_g^{sp}$ et $T_{aero}^{sp}$, on détermine le couple $\bar{T}_{res}$ résultant de ces deux couples et qui va porter sur la transmission. Pour cela, nous modélisons ce couple par la formule suivante :

$$\bar{T}_{res} = \frac{J_g}{J_r + J_g}(T_{aero}^{sp} - T_l) + \frac{J_r}{J_r + J_g}NT_g^{sp} \tag{2}$$

où $J_r$ et $J_g$ sont les inerties du rotor et de la machine électrique.

<u>3 - Génération d'une consigne de couple résultant $(T_{res}^{sp})$ qui diminue la fatigue et les moments de la transmission</u>

On cherche à modifier ce couple résultant $\bar{T}_{res}$ afin de minimiser l'impact sur la transmission et donc augmenter sa durée de vie. Pour cela, on cherche à diminuer les variations de vitesse de torsion de la transmission. Ainsi, on va chercher à compenser la couple avec des termes proportionnels à l'écart entre la vitesse du rotor et de la machine électrique. La dynamique de la structure mécanique (dynamique de la transmission) peut s'écrire sous la forme de deux systèmes du deuxième ordre couplés.

$$\begin{cases} \dfrac{J_r J_g}{J_r + J_g}\ddot{\gamma}_{tr} = -c_d\gamma_{tr} - k_d\dot{\gamma}_{tr} + \dfrac{J_g}{J_r + J_g}(T_{aero} - T_l) + \dfrac{J_r}{J_r + J_g}NT_g \\ J_g\dot{\Omega}_g = c_d\gamma_{tr} + k_d\dot{\gamma}_{tr} + N_{gb}T_g \end{cases} \tag{3}$$

où

- $\gamma_{tr}$, $\dot{\gamma}_{tr}$ et $\ddot{\gamma}_{tr}$ sont respectivement l'angle, la vitesse et l'accélération de la torsion de l'arbre. Il faut noter que la vitesse de torsion de la transmission est la différence de vitesse du rotor et de la génératrice ramenée sur le même axe, i.e. $\dot{\gamma}_{tr} = \Omega_r - \dfrac{1}{N}\Omega_g$ ;
- kd est l'amortissement structurel de la transmission ;
- cd est la raideur de la transmission.

Ainsi, la stratégie de contrôle cherche à générer un couple résultant différent de $\bar{T}_{res}$ pour minimiser la fatigue et les moments extrêmes de la transmission. Nous allons donc avoir :

$$T_{res}^{sp} = \bar{T}_{res} - k\dot{\gamma}_{tr}$$

avec k des paramètres de calibration strictement positif. Ces paramètres peuvent être déterminés expérimentalement par un spécialiste. On peut considérer que tous ces paramètres k sont égaux à 1 par exemple.

4 - Répartition du couple résultant consigne $\left(T_{res}^{sp}\right)$ entre les couples aérodynamiques et électriques

Cette consigne de couple résultant $T_{res}^{sp}$ est ensuite réparti entre le couple aérodynamique $T_{aero}$ et le couple de la machine électrique $T_g$. Pour cela, la répartition se fait en fonction des zones opératoires. Dans une zone 2, où le couple aérodynamique est limitant, nous avons une réserve de couple. Dans ce cas, la modification de couple influe sur le couple de la machine électrique et non sur le couple aérodynamique. Ainsi, dans ce cas, nous avons :

$$\begin{cases} T_{aero}^{strat} = T_{aero}^{sp} \\ T_g^{strat} = T_g^{sp} - k\dfrac{J_r + J_g}{NJ_r}\dot{\gamma}_{tr} \end{cases} \qquad (4)$$

De la même manière dans une zone 3 où le couple de la machine électrique est limitant, la modification de couple influe sur le couple aérodynamique ce qui donne :

$$\begin{cases} T_{aero}^{strat} = T_{aero}^{sp} - k\dfrac{J_r + J_g}{J_g}\dot{\gamma}_{tr} \\ T_g^{strat} = T_g^{sp} \end{cases} \qquad (5)$$

5 - Détermination d'une position de pitch qui permet de réaliser ce couple aérodynamique.

A partir de cette consigne de couple aérodynamique $T_{aero}^{strat}$, on détermine un angle d'inclinaison $\theta$ des pales pour satisfaire cette demande de couple aérodynamique $T_{aero}^{strat}$. Pour cela, on utilise le modèle de couple aérodynamique (équation 1), avec la mesure de la vitesse du vent $V_w$, la mesure du régime du rotor $\Omega_r^{sp}$ et le couple consigne $T_{aero}^{strat}$. En inversant le modèle (par un algorithme de Newton par exemple), on obtient une consigne de pitch $\overline{\theta}$ :

$$\overline{\theta} = \arg\left(\min_\theta\left(T_{aero}^{strat} - 0.5\rho\Pi R_b^3 c_q\left(\theta, \frac{R_b\Omega_r}{V_w}\right)V_w^2\right)\right)$$

Ainsi, avec cette loi de commande, on garantit la convergence vers la vitesse rotor de référence, permettant de maximiser la puissance récupérée, tout en minimisant l'impact mécanique (fatigue et moment extrême) sur la transmission.

6 - Orientation des pales selon le pitch déterminé

Pour optimiser la puissance électrique récupérée par l'éolienne, on oriente les pales selon l'angle d'inclinaison calculé à l'étape précédente.

**Revendications**

**1.** Procédé pour optimiser la production d'énergie électrique d'une éolienne, ladite éolienne comportant une nacelle munie d'un rotor sur lequel des pales sont fixées, et une machine électrique reliée audit rotor par une transmission, dans lequel on contrôle un angle d'inclinaison desdites pâles, **caractérisé en ce qu'**il comporte les étapes suivantes :

a) on détermine une consigne de couple aérodynamique et une consigne de couple de la machine électrique permettant de maximiser la puissance récupérée, à partir de mesures de vitesse de vent, de vitesse du rotor et de vitesse de la machine électrique ;

b) on modifie au moins l'une desdites consignes en lui soustrayant un terme proportionnel à un écart entre vitesse mesurée du rotor et vitesse mesurée de la machine électrique ;

c) on détermine un angle d'inclinaison des pales permettant de réaliser ladite consigne de couple aérodynamique ;

d) on oriente les pales selon ledit angle d'inclinaison.

**2.** Procédé selon la revendication 1, dans lequel on modifie au moins l'une desdites consignes en réalisant les étapes suivantes :

i. on détermine un couple $\overline{T}_{res}$ sur ladite transmission résultant desdites consignes de couple aérodynamique et de couple de la machine électrique ;

ii. on détermine une consigne de couple résultant $T_{res}^{sp}$ en soustrayant audit couple résultant $T_{res}$ un terme proportionnel à l'écart entre la vitesse mesurée du rotor et la vitesse mesurée de la machine électrique ;

iii. on modifie ladite consigne de couple aérodynamique en répartissant ladite consigne de couple résultant en un couple aérodynamique et un couple de la machine électrique.

**3.** Procédé selon la revendication 2, dans lequel ladite consigne de couple résultant $T_{res}^{sp}$ s'écrit :

$$T_{res}^{sp} = \overline{T_{res}} - k\dot{\gamma}_{tr}$$

- avec k des paramètres de calibration strictement positif, et $\dot{\gamma}_{tr}$ vitesse d'une torsion de la transmission, égale à une différence de vitesse du rotor $\Omega_r$ et de la machine électrique $\Omega_g$ ramenée sur un même axe :

$$\dot{\gamma}_{tr} = \Omega_r - \frac{1}{N}\Omega_g \text{ ,}$$ où N est un rapport de boîte entre axe du rotor et axe de la machine électrique.

**4.** Procédé selon l'une des revendications précédentes, dans lequel on détermine l'angle d'inclinaison des pales en inversant un modèle de couple aérodynamique et en utilisant lesdites mesures de vitesse de vent et de vitesse du rotor.

**5.** Procédé selon l'une des revendications précédentes, dans lequel on détermine le terme proportionnel en utilisant un modèle de la dynamique de la transmission.

**Patentansprüche**

**1.** Verfahren zur Optimierung der Stromproduktion eines Windrades, wobei das Windrad eine Gondel, die mit einem Rotor versehen ist, auf dem Blätter befestigt sind, und eine elektrische Maschine umfasst, die mit dem Rotor durch eine Übertragung verbunden ist, bei dem ein Neigungswinkel der Blätter kontrolliert wird, **dadurch gekennzeichnet, dass** es die folgenden Schritte umfasst:

a) Bestimmen eines aerodynamischen Drehmomentsollwerts und eines Drehmomentsollwerts der elektrischen Maschine, die es ermöglichen, die gewonnene Leistung zu maximieren, aus Messungen der Windgeschwindigkeit, der Geschwindigkeit des Rotors und der Geschwindigkeit der elektrischen Maschine;

b) Ändern mindestens eines der Sollwerte, wobei von ihm ein Term proportional zu einer Abweichung zwischen der gemessenen Geschwindigkeit des Rotors und der gemessenen Geschwindigkeit der elektrischen Maschine abgezogen wird;

c) Bestimmen eines Neigungswinkels der Blätter, der es ermöglicht, den aerodynamischen Sollwert zu verwirklichen;

d) Ausrichten der Blätter nach dem Neigungswinkel.

**2.** Verfahren nach Anspruch 1, bei dem mindestens einer der Sollwerte geändert wird, wobei die folgenden Schritte durchgeführt werden:

i. Bestimmen eines Drehmoments T$_{res}$ auf der Übertragung, das sich aus dem aerodynamischen Drehmomentsollwert und dem Drehmomentsollwert der elektrischen Maschine ergibt;

ii. Bestimmen eines Drehmomentsollwerts T$^{sp}$$_{res}$, wobei von dem resultierenden Sollwert $\overline{\overline{T_{res}}}$ ein Term propor-tional zu der Abweichung zwischen der gemessenen Geschwindigkeit des Rotors und der gemessenen Geschwindigkeit der elektrischen Maschine abgezogen wird;

iii. Ändern des aerodynamischen Drehmomentsollwerts, wobei der resultierende Drehmomentsollwert in ein aerodynamisches Drehmoment und ein Drehmoment der elektrischen Maschine aufgeteilt wird.

3. Verfahren nach Anspruch 2, bei dem der resultierende Drehmomentsollwert T$^{sp}$$_{res}$ folgendermaßen geschrieben wird:

$$T_{res}^{sp} = \overline{\overline{T_{res}}} - k\dot{\gamma}_{tr}$$

wobei k unbedingt positive Kalibrierparameter bezeichnet, $\dot{\gamma}_{tr}$ die Geschwindigkeit einer Torsion der Übertragung gleich einer Geschwindigkeitsdifferenz des Rotors $\dot{\Omega}$ und der elektrischen Maschine

$\Omega$ ist, gebracht auf eine selbe Achse: $\dot{\gamma}_{tr} = \Omega_r - \frac{1}{N}\Omega_g$ , wobei N ein Übersetzungsverhältnis zwischen Achse des Rotors und Achse der elektrischen Maschine ist.

4. Verfahren nach einem der vorhergehenden Ansprüche, bei dem der Neigungswinkel der Blätter bestimmt wird, wobei ein aerodynamisches Drehmomentmodell umgekehrt wird und die Messungen der Windgeschwindigkeit und der Geschwindigkeit des Rotors verwendet werden.

5. Verfahren nach einem der vorhergehenden Ansprüche, bei dem der proportionale Term unter Verwendung eines Modells der Dynamik der Übertragung bestimmt wird.

**Claims**

1. A method of optimizing the electric power generation of a wind turbine, said wind turbine comprising a nacelle provided with a rotor to which blades are fastened, and an electric machine connected to said rotor by a transmission, wherein an angle of inclination of said blades is controlled, **characterized in that** it comprises the following stages:

a) determining an aerodynamic torque setpoint and an electric machine torque setpoint allowing to maximize the recovered power, from wind speed, rotor speed and electric machine speed measurements,

b) modifying at least one of said setpoints by subtracting therefrom a term proportional to a difference between measured rotor speed and measured electric machine speed,

c) determining an angle of inclination of the blades allowing said aerodynamic torque setpoint to be achieved,

d) orienting the blades at said angle of inclination.

2. A method as claimed in claim 1, wherein at least one of said setpoints is modified by carrying out the following stages:

i. determining a torque $\overline{T}_{res}$ on said transmission resulting from said aerodynamic torque and electric machine torque setpoints,

ii. determining a resulting torque setpoint $T_{res}^{sp}$ by subtracting from said resulting torque $T_{res}$ a term proportional to the difference between the measured rotor speed and the measured electric machine speed,

iii. modifying said aerodynamic torque setpoint by splitting said resulting torque setpoint into an aerodynamic torque and an electric machine torque.

3. A method as claimed in claim 2, wherein said resulting torque setpoint $T_{res}^{sp}$ is written as follows:

$$T_{res}^{sp} = \overline{T_{res}} - k\dot{\gamma}_{tr}$$

with k strictly positive calibration parameters and $\dot{\gamma}_{tr}$ speed of a transmission torsion, equal to a difference of rotor speed $\Omega_r$ and electric machine speed $\Omega_e$ brought into the same axis: $\dot{\gamma}_{tr} = \Omega_r - \dfrac{1}{N}\Omega_e$, where N is a gear ratio between rotor axis and electric machine axis.

4. A method as claimed in any one of the previous claims, wherein the angle of inclination of the blades is determined by inverting an aerodynamic torque model and using said wind speed and rotor speed measurements.

5. A method as claimed in any one of the previous claims, wherein the proportional term is determined using a transmission dynamics model.

Fig. 1

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0008584 A1

**Littérature non-brevet citée dans la description**

- **BOUKHEZZAR B., ; LUPU L., ; SIGUERDIDJANE H., ; HAND M.** Multivariable control strategy for variable speed, variable pitch wind turbines. *Renewable Energy,* 2007, vol. 32, 1273-1287